# FASCICULE DE BREVET EUROPEEN

(11) **EP 1 885 521 B1**
(45) Date de publication et mention de la délivrance du brevet: **15.07.2009**
(21) Numéro de dépôt: 06721911.3
(22) Date de dépôt: 12.04.2006
(51) Int. Cl.: B24B 41/06, B23Q 3/18, B23Q 1/48, B23Q 1/62, B23Q 1/34

(54) **DISPOSITIF D'APPUI REGLABLE**
VERSTELLBARE STÜTZVORRICHTUNG
ADJUSTABLE SUPPORT DEVICE

(30) Priorité: 15.04.2005 EP 05405296; 12.09.2005 CH 14812005
(43) Date de publication de la demande: 13.02.2008
(73) Titulaire: Rollomatic S.A., 2525 Le Landeron (CH)
(72) Inventeur: BÜTSCHI, René, CH-2013 Colombier (CH); PAHUD, Pierre, CH-2900 Porrentruy (CH)
(74) Mandataire: Ganguillet, Cyril
(86) Numéro de dépôt international: PCT/CH2006/000209
(87) Numéro de publication internationale: WO 2006/108316

(56) Documents cités:
- EP-A- 0 299 915
- US-A1- 2002 020 069

## Description

La présente invention concerne un dispositif d'appui équipant, pour une machine de meulage, une station d'usinage de tiges cylindriques, notamment de tiges cylindriques étagées, ayant un grand rapport longueur sur diamètre. Un dispositif en conformité avec le préambule de la revendication 1 est connu du document EP-A-0 299 915, par exemple.

Dans les machines de meulage, notamment dans les machines-transfert à poupée rotative comportant plusieurs stations d'usinage, le problème du positionnement précis et du maintien des pièces à usiner portées par la ou les poupée(s) et amenées successivement devant chaque station se pose de manière particulièrement aiguë lorsque les pièces à usiner sont des tiges cylindriques ayant un grand rapport diamètre sur longueur, comme par exemple les forets de petit diamètre. Lorsque l'entraînement en rotation et le positionnement axial de la pièce à usiner sont assurés par une poupée, le positionnement dans le plan perpendiculaire à l'axe de la pièce est généralement réalisé par un premier organe d'appui en Vé associé à un organe plat qui emprisonne le corps de la pièce et par un second organe d'appui en Vé qui est ouvert et qui soutient l'extrémité de la pièce. Ce second Vé doit être positionné de telle manière que l'extrémité de la pièce qu'il soutient soit absolument alignée sur celle qui est fixée dans le premier Vé. Ceci nécessite des dispositifs d'ajustage très précis réalisés jusqu'ici généralement au moyen de rails et leviers ainsi que des moyens de blocage compliqués.

Par rapport à cet état de la technique, la présente invention propose un dispositif d'appui de conception nouvelle, capable de soutenir la partie mince des pièces avec la sûreté et la haute précision qui sont requises, tout en permettant des ajustages faciles et dont la réalisation soit possible par des méthodes fiables.

Dans ce but l'objet de la présente invention concerne un dispositif d'appui équipant, pour une machine de meulage, une station d'usinage de tiges cylindriques, notamment de tiges cylindriques étagées, ayant un grand rapport longueur sur diamètre, ce dispositif, comportant un socle, un premier organe d'appui solidaire du socle, un second organe d'appui destiné à supporter la partie extrême d'une desdites tiges cylindriques en position d'usinage et des moyens de liaison réglables entre le socle et le second organe d'appui, lesdits moyens constituant un assemblage de plusieurs composants assurant chacun l'une de trois fonctions, soit une fonction de translation, une fonction de rotation dans un premier plan de référence et une fonction de rotation dans un second plan de référence, cet assemblage agissant sur le second organe d'appui.

De préférence, le premier organe d'appui est un organe d'appui en Vé fermé et en ce que le second organe d'appui est un organe d'appui en Vé ouvert.

Selon un mode d'exécution préféré de l'invention, les dits moyens réglables comportent quatre organes de commande indépendants dont deux déplacent le Vé ouvert en translation selon deux directions perpendiculaires dans le plan perpendiculaire à l'axe du Vé fermé et les deux autres le déplacent en rotation autour du centre du Vé ouvert, les deux axes de rotation étant perpendiculaires l'un à l'autre dans un plan perpendiculaire à l'axe du Vé fermé.

De préférence également, le dispositif est formé de trois composants principaux comportant chacun un ensemble monobloc avec plusieurs parties rigides reliées par des parties minces et déformables élastiquement, une des dites parties rigides ayant fonction de cadre, chaque ensemble monobloc étant usiné en une pièce dans une matière homogène, par électroérosion.

Chacun des dits ensembles monoblocs peut comporter, outre son cadre, au moins un élément rigide ayant fonction d'organe de commande, et un autre élément rigide, mobile en réponse à un déplacement du ou des organes de commande de l'ensemble, les dits ensembles pouvant être associés en cascade, l'élément rigide et mobile de chacun d'eux portant le cadre de l'ensemble suivant ou, pour le dernier, le Vé ouvert du dispositif, le cadre du premier ensemble formant le socle du dispositif.

Le cadre du premier ensemble peut porter le Vé fermé rigidement fixé sur lui, la position et la direction de l'axe de la tige à soutenir étant définis par ce Vé.

On décrit ci-après une forme d'exécution et une variante de l'objet de l'invention, donnée à titre d'exemple, en se référant aux dessins annexés dont :
- la figure 1 est une vue en perspective de l'ensemble du dispositif à l'état assemblé,
- les figures 2, 3 et 4 sont des schémas illustrant le fonctionnement de chacun des composants du dispositif,
- les figures 5, 6 et 7 sont des vues en plan simplifiées de chacun des ensembles monoblocs entrant dans la constitution des composants du dispositif,
- la figure 8 est une vue en perspective éclatée montrant l'assemblage du dispositif, et
- la figure 9 est une vue analogue à celle de la figure 5, montrant en coupe le premier ensemble monobloc dans la variante d'exécution du dispositif.

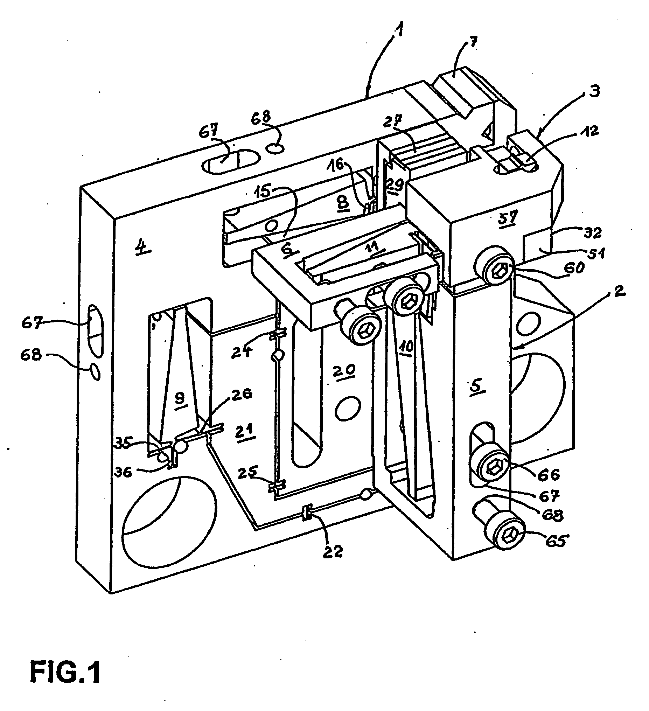

Le dispositif qui va être donné en exemple est représenté dans son état assemblé à la figure 1. On distingue à cette figure trois composants de réglage : le composant de translation 1, le composant de rotation dans le plan vertical 2 et le composant de rotation dans le plan horizontal 3. Comme on le verra plus loin, chaque composant comporte, comme élément principal, un ensemble monobloc avec un cadre rigide désigné par 4 pour le composant 1, par 5 pour le composant 2 et par 6 pour le composant 3. Le cadre 4 du composant de translation 1 porte un organe en Vé 7, rigidement fixé dans une gorge à profil rectangulaire 63, à son angle supérieur droit à la figure 1. Cet organe 7 est destiné à soutenir la partie des tiges cylindriques à usiner la plus proche de la poupée qui l'entraîne. Durant les opérations ce Vé est fermé par une plaque (non représentée) de façon que le corps de la pièce soit emprisonné et assuré contre toute vibration.

On distingue encore à la figure 1 quatre organes de commande 8, 9, 10, 11 dont la disposition et les fonctions seront décrites plus loin, et un organe en Vé ouvert 12 dont l'axe se trouve confondu avec l'axe de l'encoche du Vé 7 et dont le positionnement de haute précision est précisément réalisé par le dispositif décrit.

Avant de revenir à la figure 1 pour détailler quelques particularités de l'assemblage, on expliquera d'abord la géométrie du fonctionnement des composants 1, 2 et 3 ainsi que les détails de réalisation des ensembles monoblocs formant leur partie principale.

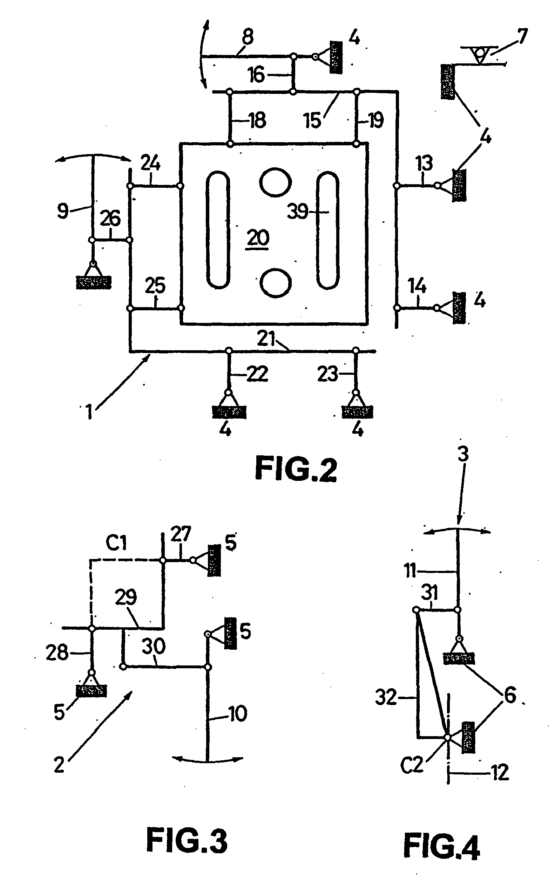

Les figures 2, 3 et 4 sont des schémas graphiques de fonctionnement. Les ancrages figurant sur ces figures représentent les cadres 4, 5 et 6 de la figure 1. Pour le composant 1 (figure 2) deux biellettes 13, 14 relient au cadre 4 un élément intermédiaire rigide 15 sur lequel agit, par une biellette articulée 16, un levier qui pivote sur un ancrage dans le cadre 4. Ce levier est désigné par le chiffre 8 et représente le premier des organes de commande déjà nommés à la figure 1. Il est commandé par action sur sa flèche et agit avec une démultiplication convenable sur l'élément 15 en le déplaçant en translation de haut en bas ou de bas en haut dans un plan vertical, guidé par les biellettes 13 et 14. L'élément 15 transmet son mouvement par des biellettes 18 et 19 à un élément mobile et rigide 20 faisant partie du composant 1. De manière symétrique un élément intermédiaire rigide 21 est relié par deux biellettes 22 et 23, symétriques des biellettes 13 et 14, à deux ancrages dans le cadre 4, en outre par deux biellettes 24, 25 à l'élément 20, et par une biellette 26 à un levier portant le chiffre 9 à la figure 1 et constituant un organe de commande qui déplace l'élément 20 en translation horizontale. Ainsi les déplacements verticaux sont transmis à l'élément 20 par l'élément 15 et les biellettes 18, 19, et les déplacements horizontaux le sont par l'élément intermédiaire 21 et les biellettes 24 et 25. On notera que le Vé fermé et fixe désigné par 7 à la figure 1 est représenté solidaire d'un des ancrages 4 à la figure 2.

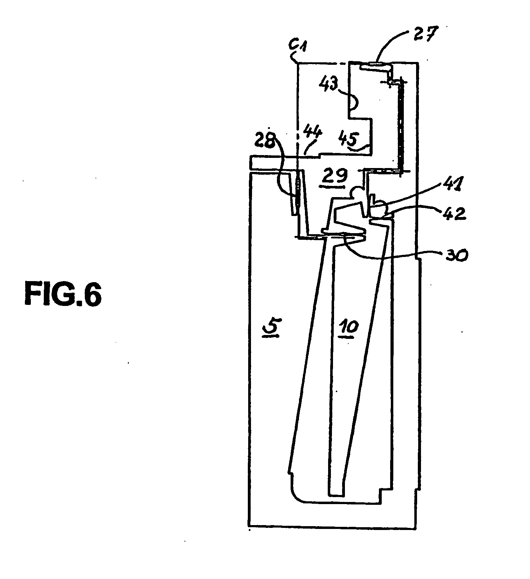

La figure 3 est le schéma graphique du fonctionnement du composant 2. Les ancrages 5 symbolisent le cadre de ce composant 2 sur lequel sont articulées deux biellettes 27, 28 reliant à ce cadre un élément rigide et mobile 29, et un levier 10 image du levier de commande de même chiffre à la figure 1. Une biellette 30 transmet avec une démultiplication convenable les déplacements du levier de commande 10 à l'organe 29. Comme on le voit à la figure 2 et comme il résultera encore de l'exposé de la figure 6, l'élément 29 et les points d'articulation des biellettes sont établis de manière que le déplacement du levier 10 déplace l'élément 29 en rotation autour d'un centre C1 dont le positionnement exact apparaîtra plus loin.

Enfin un troisième schéma graphique (figure 4) illustre le fonctionnement du composant 3. Le levier de commande 11, articulé sur un ancrage du cadre 6, transmet ses mouvements de rotation, également avec une démultiplication dûment étudiée, par une biellette 31, à un élément rigide et mobile 32 qui pivote aussi sur le cadre 6. On notera que le chiffre 12 désignant à la figure 1 le Vé ouvert ajustable du dispositif a été reporté à la figure 4. La ligne représentant l'axe de ce Vé coupe perpendiculairement l'axe de l'articulation de l'élément 32 sur le cadre 6. Le Vé réglable sera solidaire de l'élément 32, que l'organe de commande 11 fait pivoter autour du point C2. Les deux points C1 et C2 seront en fait confondus dans le dispositif assemblé comme on le verra plus loin.

On comprend que si le cadre 6 du composant 3 est solidaire de l'élément rigide 29 du composant 2 et si le cadre 5 de ce composant 2 est lui-même solidaire de l'élément rigide et mobile 20 du composant 1, les organes de commande 8, 9, 10 et 11 permettent d'imposer à l'élément 12 des translations verticales et horizontales et des rotations selon deux axes perpendiculaires autour du point fixe C2 de l'articulation de l'élément 32 sur le cadre 6 et cela indépendamment et dans l'ordre qu'on désire.

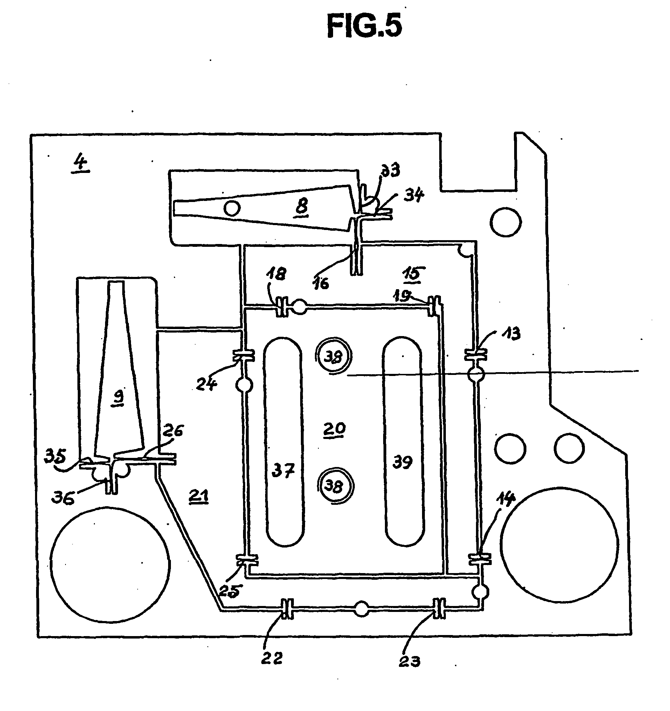

L'ensemble monobloc du composant 1 est représenté à la figure 5. Il est formé (comme le sont également les ensembles monoblocs 2 et 3) à partir d'une pièce massive en un acier parfaitement homogène. Cette pièce en forme de plaque plane quadrangulaire sera tout d'abord usinée sur son pourtour par des moyens conventionnels comme le fraisage afin de déterminer le contour du cadre 4, après quoi divers perçages seront effectués afin de permettre l'usinage fin des éléments actifs grâce au passage d'un fil dans les perçages et l'usinage par électroérosion des limitations entre les divers éléments de l'ensemble. Ces opérations délimitent des zones minces en formes de col de cygne ou de lamelles profilées reliées de façon continue à des régions massives et rigides qui divisent l'ensemble en différentes régions aptes à remplir les fonctions décrites en relation avec la figure 2. Ainsi on reconnaît à la figure 5 l'élément rigide et mobile 20 relié à l'élément intermédiaire 15 par les lamelles 18 et 19 en cols de cygne, et à l'élément intermédiaire 21 par les cols de cygne 24 et 25. Les lamelles en cols de cygne 13, 14 d'une part et 22, 23 d'autre part relient les éléments intermédiaires 15 et 21 au cadre 4. Les leviers de commande 8 et 9 découpés partiellement à l'intérieur du cadre 4 sont reliés par des zones minces 16 et 26 aux éléments intermédiaires 15 et 21. Ces zones minces sont profilées de manière à jouer le rôle des biellettes 16 et 26 de la figure 2. D'autre part deux paires de zones minces de courte longueur 33, 34, et 35, 36 respectivement, relient les leviers 8 et 9 au cadre 4. Elles jouent le rôle des articulations de ces leviers sur ce cadre. Le tracé des éléments mobiles définis à l'intérieur du cadre 4 est déterminé en fonction des capacités de déformation élastique du matériau.

Divers usinages supplémentaires comme l'ouverture allongée 37 ou les trous taraudés 38 ont des fonctions qui n'interviennent pas ici. Cependant l'ouverture allongée 39 dans l'élément 20 permet de fixer à ce dernier le cadre 5 de l'ensemble monobloc 2 représenté à la figure 6.

L'ensemble monobloc du composant 2 est représenté à la figure 6. On a expliqué précédemment comment les divers constituants des ensembles monoblocs sont formés par électroérosion. Il n'est donc pas nécessaire d'y revenir. Considérant la figure 6, l'ensemble monobloc comporte le cadre 5 en forme de U. Un élément rigide mobile, jouant le rôle de l'élément 29 de la figure 3, est relié par deux zones minces profilées 27 et 28 au cadre 5, ces zones minces jouant le rôle des biellettes de même chiffre de référence à la figure 3. La conformation de ces zones en cols de cygne est définie de telle manière que tout déplacement de l'élément 29 par rapport au cadre 5 est en fait une rotation autour d'un axe perpendiculaire au plan de l'ensemble monobloc et passant par le point C1 (figures 3 et 6). Deux autres découpages dans le cadre 5 délimitent l'élément en forme de levier 10, deux lamelles flexibles 41 et 42, profilées en cols de cygne et déterminant un axe de rotation du levier 10 autour d'un point situé, pour de petits déplacements, sur le point d'intersection des lamelles 41 et 42, et une zone allongée 30 reliant le levier 10 à l'élément mobile 29 et jouant le rôle de la biellette portant le même chiffre de référence à la figure 3. Le rapport entre la longueur totale du levier 10 et la distance entre le raccordement de la biellette 30 et le point de pivotement du levier 10 définit le rapport de démultiplication entre les déplacements, ici les rotations, imposés à l'élément 29 et au levier 10. On notera encore que l'élément 29 présente dans son contour extérieur deux surfaces d'appui 43 et 44, perpendiculaires l'une à l'autre, et entre celles-ci une gorge à profil rectangulaire 45 dont le rôle apparaîtra plus loin.

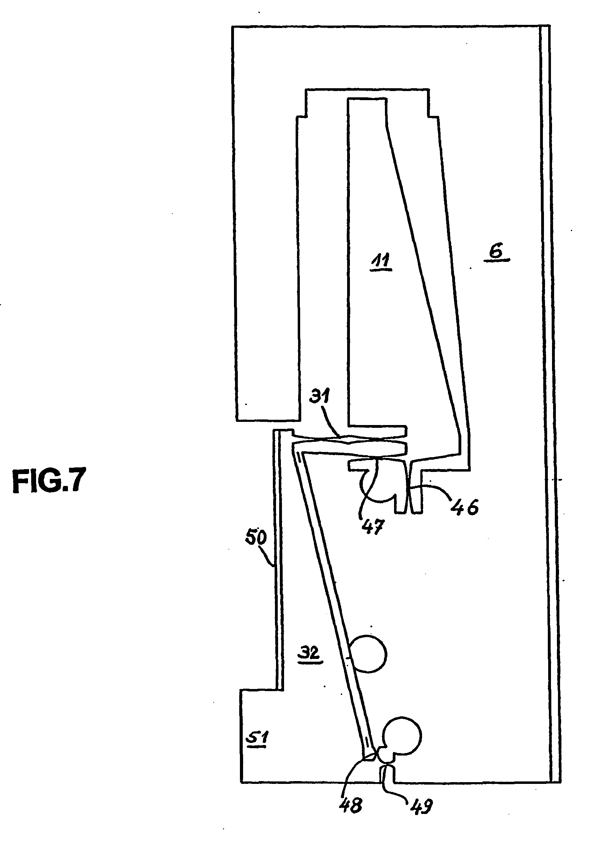

La figure 7 représente l'élément monobloc du composant 3 avec son cadre 6 en forme de G retourné, le levier de commande 11 et l'élément mobile et rigide 32. Le système de pivotement du levier 11 comporte deux lamelles courtes et perpendiculaires l'une à l'autre 46 et 47 à profil en col de cygne comme pour le pivotement du levier 10, tandis que l'élément rigide 32 est astreint à un mouvement de pivotement pur par les lamelles en col de cygne 48 et 49. Ce mouvement est transmis à l'élément 32 à partir du levier 11 par une lamelle profilée en col de cygne désignée par 31 et jouant le rôle de la biellette de même chiffre de référence à la figure 4. L'élément 32 présente une surface extérieure latérale plane 50 reliée au plan de la figure par un chanfrein et limitée vers son extrémité inférieure par une partie saillante 51.

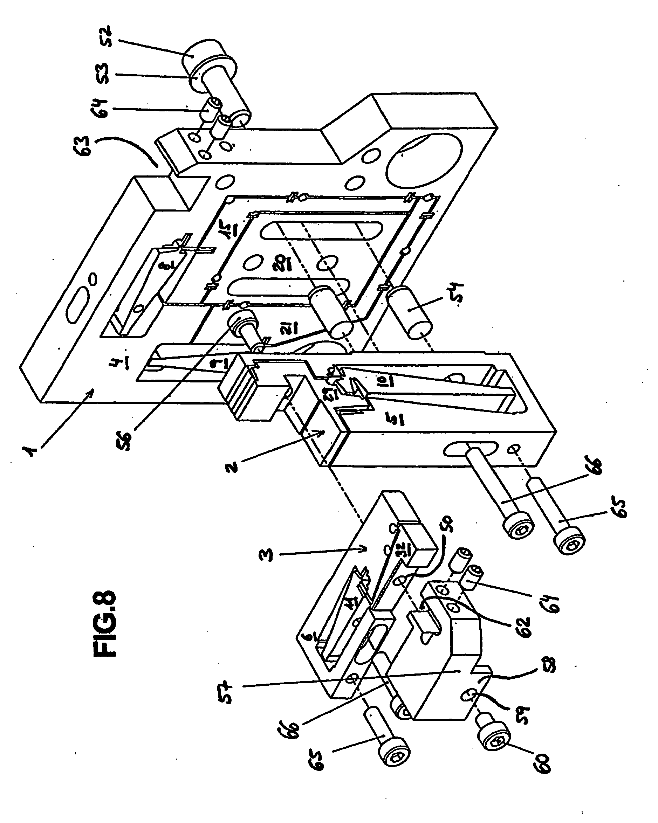

Revenant maintenant aux trois composants 1, 2, 3 du dispositif, tels qu'ils apparaissent dans la vue éclatée de la figure 8, le montant vertical arrière du cadre 5 sera fixé par une vis 52 engagée avec interposition d'une rondelle 53 à travers l'ouverture oblongue 39 en pénétrant dans un trou taraudé (non représenté) du montant du cadre 5. En même temps deux goupilles 54, engagées au-dessus et au-dessous de la vis 52 dans la même ouverture oblongue 39 et dans des ouvertures calibrées 55 du cadre 5, assureront la position parfaitement verticale de l'ensemble monobloc du composant 2 contre l'élément rigide et mobile 20.

On a décrit précédemment l'élément rigide et mobile 29 de l'ensemble monobloc du composant 2 et indiqué qu'il comportait des faces perpendiculaires 43 et 44 ainsi qu'une gorge 45. Sur la face 44 et dans la gorge 45 s'engage le montant arrière du cadre 6. Il est fixé par une vis 56 dont la tête est noyée dans une ouverture de diamètre suffisant dans le montant arrière du cadre 5. La tige de cette vis débouche dans la gorge 45 et pénètre dans un trou borgne taraudé du cadre 6. La gorge 45 et la face plane 44 assurent guidage et positionnement du cadre 6 sur l'élément 29. On a indiqué également comment l'élément rigide et mobile 32 était intégré à l'ensemble monobloc du composant 3. Sur cet élément est monté un plot intermédiaire 57 pourvu d'une languette inférieure 58 percée d'un trou 59. Ce plot vient se placer sur la surface supérieure de l'élément mobile 32, la face arrière de la languette 58 étant appliquée contre la face 50 de l'élément 32 (figure 8). La tige filetée d'une vis 60 traversant le trou 59 et, engageant le trou 61 de l'élément 32, fixe le plot 57 sur cet élément 32. Une noyure 62 ménagée dans le plot 57 vient ainsi se placer approximativement en face de la gorge 63 du cadre 4.

Il ne reste qu'à fixer le Vé fixe 7 dans la gorge 63 et le Vé ajustable 12 dans la noyure 62, ceci au moyen des vis 64, et à procéder à l'ajustage exact du Vé ouvert 12.

Pour expliquer cette dernière opération on reviendra à la figure 1. Chacun des leviers 8, 9, 10 et 11 est commandé par deux vis telles que les vis 65 et 66 représentées pour les composants 2 et 3. On voit que chacun des cadres 4, 5, 6 comporte, dans sa tranche au niveau de chacun des leviers de commande, deux ouvertures 67, 68 dont l'une est oblongue et l'autre taraudée. Ces ouvertures se trouvent dans chaque cas au voisinage de l'extrémité libre du levier 8, 9, 10 ou 11 à commander. En regard de chaque ouverture 67 le levier de commande présente un trou taraudé ajusté aux vis 66 de sorte que chacune de ces dernières peut être solidarisée à la flèche d'un levier, sa tête étant en appui contre le bord de l'ouverture 67. Les vis 65 vissées dans les ouvertures 68 agissent en poussée contre le flanc du levier à commander de sorte qu'elles le bloquent dans la position exacte voulue. Ainsi par manoeuvre des deux vis 65 et 66 commandant chaque levier 8, 9, 10 ou 11, l'organe en Vé 12 peut être déplacé selon deux mouvements de translation et deux mouvements de rotation afin que son axe soit exactement aligné sur l'axe du Vé fixe 7. Cette opération peut également être réalisée de toute autre manière adéquate, comme par exemple à l'aide d'un cône ou d'un excentrique. Le dispositif peut être réglé hors machine sous dispositif optique grossissant afin d'atteindre le maximum de précision.

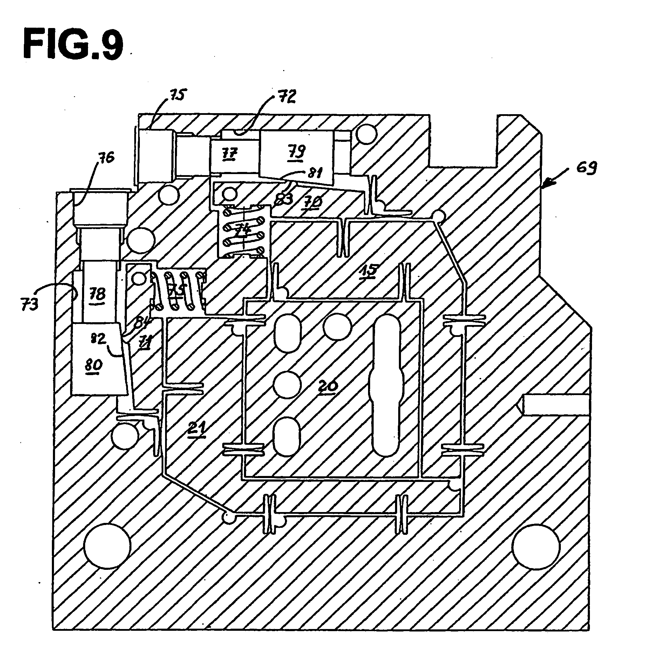

Une autre manière de réaliser les moyens de réglage des leviers 8, 9, 10 et 11 est décrite ci-après. La figure 9 est une vue en coupe de l'ensemble monobloc de la figure 5 dans laquelle les deux leviers 8 et 9 sont conformés de manière différente et sont commandés par d'autres moyens. A la figure 9, les éléments identiques à des éléments déjà décrits sont désignés par les mêmes chiffres de référence. On reconnaît ainsi, notamment dans le cadre 69, correspondant au cadre 4, l'élément rigide 20 et les éléments intermédiaires 15 et 21. Au lieu des organes de commande 8 et 9, le cadre 69 est usiné ici avec des éléments 70 et 71 qui sont également des leviers, articulés sur le cadre 69 par des lamelles en col de cygne et agissant sur les éléments 15 et 21 par l'intermédiaire d'autres lamelles jouant le rôle de biellettes.

Pour permettre l'actionnement des leviers 70 et 71, le cadre 69 est usiné avec deux logements 72, 73, limités par des génératrices perpendiculaires au plan du cadre 69 et agencés pour recevoir l'un et l'autre d'une part un ressort 74, 75 appuyant une extrémité des leviers 70, 71 et d'autre part, à travers des perçages taraudés recevant des écrous alésés 75, 76, des tiges filetées 77, 78 maintenues par les dits écrous alésés et sur chacune desquelles coulisse un chariot de commande 79, 80 guidé par un flanc des logements 72, 73 et présentant une rampe oblique 81, 82. Comme on le voit au dessin de la figure 9, chacune des rampes 81, 82 coopère avec un bossage 83, 84 ménagé sur le flanc des leviers 70, 71.

Cette disposition satisfait aux exigences posées ci-dessus. Bien entendu, les moyens de réglage des leviers 10 et 11 des ensembles monoblocs 5 et 6 du dispositif d'appui peuvent aussi être conçus de la même manière.

Tel que décrit ci-dessus, le dispositif d'appui selon l'invention, réalisé à l'aide de composants déformables à grande démultiplication, permet d'obtenir quatre réglages indépendants de très hautes résolutions avec une très grande précision.

## Revendications

1. Dispositif d'appui équipant, pour une machine de meulage, une station d'usinage de tiges cylindriques, notamment de tiges cylindriques étagées, ayant un grand rapport longueur sur diamètre, ce dispositif, comportant un socle, un premier organe d'appui (7), un second organe d'appui (12) destiné à supporter la partie extrême d'une desdites tiges cylindriques en position d'usinage et des moyens de liaison réglables entre le socle et le second organe d'appui, **caractérisé en ce que** le premier organe d'appui (7) est solidaire du socle et **en ce que** lesdits moyens constituent un assemblage de plusieurs composants assurant chacun l'une de trois fonctions, soit une fonction de translation, une fonction de rotation dans un premier plan de référence et une fonction de rotation dans un second plan de référence, cet assemblage agissant sur le second organe d'appui.

2. Dispositif selon la revendication 1, **caractérisé en ce que** le premier organe d'appui est un organe d'appui en Vé fermé et **en ce que** le second organe d'appui est un organe d'appui en Vé ouvert.

3. Dispositif selon la revendication 2, **caractérisé en ce que** les dits moyens réglables (1, 2, 3) comportent quatre organes de commande indépendants (8, 9, 10, 11) dont deux déplacent le Vé ouvert (12) en translation selon deux directions perpendiculaires dans le plan perpendiculaire à l'axe du Vé fermé et les deux autres le déplacent en rotation autour du centre du Vé ouvert, les deux axes de rotation étant perpendiculaires l'un à l'autre dans un plan perpendiculaire à l'axe du Vé fermé (7).

4. Dispositif selon la revendication 1, **caractérisé en ce qu'**il est formé de trois composants (1, 2, 3) principaux comportant chacun un ensemble monobloc avec plusieurs parties rigides reliées par des parties minces et déformables élastiquement, une des dites parties rigides ayant fonction de cadre (4, 5, 6), chaque ensemble monobloc étant usiné en une pièce dans une matière homogène, par électroérosion.

5. Dispositif selon les revendications 3 et 4, **caractérisé en ce que** chacun des dits ensembles monoblocs comporte, outre son cadre, au moins un élément rigide (8, 9, 10, 11) ayant fonction d'organe de commande, et un autre élément rigide (20, 29, 32), mobile en réponse à un déplacement du ou des organes de commande de l'ensemble.

6. Dispositif selon la revendication 5, **caractérisé en ce que** les dits ensembles sont associés en cascade, l'élément rigide et mobile de chacun d'eux portant le cadre de l'ensemble suivant ou, pour le dernier, le Vé ouvert (12) du dispositif, et **en ce que** le cadre (4) du premier ensemble forme le socle du dispositif.

7. Dispositif selon la revendication 6, **caractérisé en ce que** le cadre (4) du premier ensemble porte le Vé fermé (7) rigidement fixé sur lui, la position et la direction de l'axe de la tige à soutenir étant définis par ce Vé.

8. Dispositif selon la revendication 5, **caractérisé en ce que** chacun des dits éléments rigides ayant fonction d'organe de commande (8, 9, 10, 11) est ajustable dans son cadre (4, 5, 6) au moyen d'une paire de vis (65, 66) traversant une branche du cadre, l'une (65) à travers un trou taraudé (68) et l'autre (66) à travers un trou allongé (67), cette dernière étant vissée à l'organe de commande.

9. Dispositif selon la revendication 5, **caractérisé en ce que** chacun des dits éléments rigides ayant fonction d'organe de commande (70, 71) est ajustable dans son cadre (69) au moyen d'un chariot de commande (79, 80) coulissant sur une tige filetée (77, 78) montée à travers un écrou alésé (75, 76) dans un logement (72, 73) du cadre (69), ce chariot étant guidé par un flanc du logement (72, 73) et coopérant par une rampe oblique (81, 82) avec un bossage (83, 84) de l'organe de commande (70, 71) contre l'action d'un ressort antagoniste (74, 75).

10. Machine de meulage, **caractérisée en ce qu'**elle comprend un dispositif d'appui selon l'une des revendications 1 à 9.

## Claims

1. A rest device used in a grinding machine to equip a machining station for machining cylindrical rods, in particular stepped cylindrical rods, having a large length-to-diameter ratio, said device comprising a base, a first rest member (7), a second rest member (12) serving to support the end portion of one of said cylindrical rods in the machining position, and adjustable coupling means between the base and the second rest member, said rest device being **characterized in that** said first rest member (7) is secured to the base and **in that** said means constitute an assembly of a plurality of components, each of which performs one of three functions, namely a function of movement in translation, a function of movement in rotation in a first reference plane, and a function of movement in rotation in a second reference plane, said assembly acting on the second rest member.

2. A device according to claim 1, **characterized in that** the first rest member is a closed-V-shaped rest member, and **in that** the second rest member is an open-V-shaped rest member.

3. A device according to claim 2, **characterized in that** said adjustable means (1, 2, 3) comprise four independent control means (8, 9, 10, 11), two of which move the open V-shape (12) in translation in two mutually perpendicular directions in a plane perpendicular to the axis of the closed V-shape, and the two other control means move it in rotation about the center of the open V-shape, the two rotation axes being perpendicular to each other in a plane perpendicular to the axis of the closed V-shape (7).

4. A device according to claim 1, **characterized in that** it is made up of three main components (1, 2, 3), each of which comprises a one-piece unit with a plurality of rigid portions interconnected via thin and elastically deformable portions, one of said rigid portions acting as a frame (4, 5, 6), each one-piece unit being machined in one piece of a homogenous material, by electroerosion.

5. A device according to claims 3 and 4, **characterized in that** each of said one-piece units further comprises, in addition to its frame, at least one rigid element (8, 9, 10, 11) acting as a control member, and another rigid element (20, 29, 32) mounted to move in response to a movement of said control member(s) of the unit.

6. A device according to claim 5, **characterized in that** said units are associated in cascade, the rigid and moving element of each of them carrying the frame of the following unit or, for the last unit, the open V-shape (12) of the device, and **in that** the frame (4) of the first unit forms the base of the device.

7. A device according to claim 6, **characterized in that** the frame (4) of the first unit carries the closed V-shape (7) rigidly fastened to it, the position and the direction of the axis of the rod to be supported being defined by said V-shape.

8. A device according to claim 5, **characterized in that** each of said rigid elements acting as a control member (8, 9, 10, 11) is adjustable in its frame (4, 5, 6) by means of a pair of screws (65, 66) passing through one branch of the frame, one screw (65) through a tapped hole (68) and the other screw (66) through an elongate hole (67), said other screw being screwed to the control member.

9. A device according to claim 5, **characterized in that** each of said rigid elements acting as control members (70, 71) is adjustable in its frame (69) by means of a control slide (79, 80) mounted to slide on a threaded rod (77, 78) mounted through a bored nut (75, 76) in a recess (72, 73) of the frame (69), said slide being guided by one side of the recess (72, 73) and co-operating via a slanting ramp (81, 82) with a projection (83, 84) of the control member (70, 71) against the action from an antagonistic spring (74, 75).

10. A grinding machine, **characterized in that** it comprises a rest device according to any one of claims 1 to 9.

## Patentansprüche

1. Stützvorrichtung für eine Station zur Bearbeitung zylindrischer Stäbe für eine Schleifmaschine, insbesondere gestufter zylindrischer Stäbe mit einem großen Längen-Durchmesser-Verhältnis, wobei diese Vorrichtung umfasst: einen Sockel, ein erstes Stützorgan (7), ein zweites Stützorgan (12), das dazu bestimmt ist, den Endteil von einem der zylindrischen Stäbe in der Bearbeitungsposition zu halten, und einstellbare Verbindungsmittel zwischen dem Sockel und dem zweiten Stützorgan, **dadurch gekennzeichnet, dass** das erste Stützorgan (7) mit dem Sockel fest verbunden ist, und dass die Mittel einen Verbund mehrerer Bauteile darstellen, die jeweils eine von drei Funktionen erfüllen, das heisst eine Translationsfunktion, eine Drehfunktion in einer ersten Bezugsebene und eine Drehfunktion in einer zweiten Bezugsebene, wobei dieser Verbund auf das zweite Stützorgan einwirkt.

2. Vorrichtung nach Anspruch 1, **dadurch gekennzeichnet, dass** das erste Stützorgan ein Stützorgan in Form eines geschlossenen Prismenstücks ist und dass das zweite Stützorgan ein Stützorgan in Form eines offenen Prismenstücks ist.

3. Vorrichtung nach Anspruch 2, **dadurch gekennzeichnet, dass** die einstellbaren Mittel (1, 2, 3) vier unabhängige Betätigungsorgane (8, 9, 10, 11) umfassen, wobei zwei das offene Prismenstück (12) in einer Translationsbewegung in zwei zueinander senkrechten Richtungen in der Ebene bewegen, die senkrecht zur Achse des geschlossenen Prismenstücks ist, und wobei die zwei anderen es in eine Drehbewegung um den Mittelpunkt des offenen Prismenstücks versetzen, wobei die beiden Drehachsen zueinander senkrecht sind, und zwar in einer Ebene, die senkrecht zur Achse des geschlossenen Prismenstücks (7) ist.

4. Vorrichtung nach Anspruch 1, **dadurch gekennzeichnet, dass** sie aus drei Hauptkomponenten (1, 2, 3) gebildet ist, die jeweils eine Monoblock-Einheit mit mehreren starren Teilen umfassen, die durch dünne und elastisch verformbare Teile verbunden sind, wobei einer der starren Teile die Funktion eines Rahmens (4, 5, 6) ausübt und wobei jede Monoblock-Einheit in einem Stück mittels Elektroerosion aus einem homogenen Material hergestellt ist.

5. Vorrichtung nach den Ansprüchen 3 und 4, **dadurch gekennzeichnet, dass** jede der Monoblock-Einheiten neben ihrem Rahmen umfasst: mindestens ein starres Element (8, 9, 10, 11), das als Betätigungsorgan fungiert, und ein anderes starres Element (20, 29, 30), das als Reaktion auf eine Bewegung des Betätigungsorgans oder der Betätigungsorgane der Einheit beweglich ist.

6. Vorrichtung nach Anspruch 5, **dadurch gekennzeichnet, dass** die Einheiten kaskadenartig verbunden sind, wobei das starre und das bewegliche Element jeder von ihnen den Rahmen der folgenden Einheit bzw. im Fall des letzten das offene Prismenstück (12) der Vorrichtung tragen und dass der Rahmen (4) der ersten Einheit den Sockel der Vorrichtung bildet.

7. Vorrichtung nach Anspruch 6, **dadurch gekennzeichnet, dass** der Rahmen (4) der ersten Einheit das geschlossene Prismenstück (7) trägt, das starr an ihm befestigt ist, wobei die Position und die Richtung der Achse des zu haltenden Stabs durch dieses Prismenstück definiert werden.

8. Vorrichtung nach Anspruch 5, **dadurch gekennzeichnet, dass** jedes der als Betätigungsorgan (8, 9, 10, 11) fungierenden starren Elemente in seinem Rahmen (4, 5, 6) mittels eines Paares von Schrauben (65, 66) einstellbar ist, die einen Arm des Rahmens durchqueren, wobei eine (65) eine Gewindebohrung (68) und die andere (66) ein Langloch (67) durchquert und wobei die Letztere mit dem Betätigungsorgan verschraubt ist.

9. Vorrichtung nach Anspruch 5, **dadurch gekennzeichnet, dass** jedes der als Betätigungsorgan (70, 71) fungierenden starren Elemente in seinem Rahmen (69) mittels eines Hetätigungsschlittens (79, 80) einstellbar ist, der auf einem Gewindestab (77, 78) gleitet, der durch eine Schraubenmutter (75, 76) in einer Aufnahme (72, 73) des Rahmens (69) montiert ist, wobei dieser Schlitten durch eine Flanke der Aufnahme (72, 73) geführt wird und durch eine schräge Rampe (81, 82) gegen die Wirkung einer gegenwirkenden Feder (74, 75) mit einer Erhebung (83, 84) des Betätigungsorgans (70, 71) zusammenarbeitet.

10. Schleifmaschine, **dadurch gekennzeichnet, dass** sie eine Stützvorrichtung nach einem der Ansprüche 1 bis 9 einschliesst.
